# EUROPEAN PATENT SPECIFICATION

(11) **EP 3 778 819 B1**
(45) Date of publication and mention of the grant of the patent: **21.02.2024**
(21) Application number: 19777996.0
(22) Date of filing: 13.03.2019
(51) Int. Cl.: C09J 123/26, B32B 15/085, B32B 27/32, C09J 125/04, C09J 163/00, C09J 175/04, C09J 201/00, C08F 255/02, C08G 18/40, C08G 18/62, C08G 18/69, C08G 18/73, C08G 18/79, C09J 151/06, H01M 50/10

(54) **POLYOLEFIN-BASED ADHESIVE COMPOSITION**
POLYOLEFINBASIERTE HAFTZUSAMMENSETZUNG
COMPOSITION ADHÉSIVE À BASE DE POLYOLÉFINES

(30) Priority: 30.03.2018 JP 2018068498; 30.03.2018 JP 2018068499
(43) Date of publication of application: 17.02.2021
(73) Proprietor: TOYOBO MC Corporation, Osaka-shi, Osaka 5300001 (JP)
(72) Inventor: SAKATA, Hideyuki, Takasago-shi, Hyogo 676-0082 (JP); OKANO, Shohei, Takasago-shi, Hyogo 676-0082 (JP); NAKAJIMA, Momoko, Takasago-shi, Hyogo 676-0082 (JP)
(74) Representative: Vossius & Partner Patentanwälte Rechtsanwälte mbB
(86) International application number: PCT/JP2019/010255
(87) International publication number: WO 2019/188283

(56) References cited:
- WO-A1-2013/114934
- WO-A1-2015/111488
- WO-A1-2016/042837
- WO-A1-2017/038615
- WO-A1-2017/187904
- WO-A1-2017/187904
- WO-A1-2017/195266
- WO-A1-2017/195266
- JP-A- 2006 137 947
- JP-A- 2014 024 945
- US-A1- 2017 009 110

## Description

### Technical Field

The present invention relates to an adhesive composition, a laminate, and a packaging material for a lithium-ion battery.

### Background Art

In recent years, lithium-ion batteries (LIBs), which can be made ultra-thin and small, have been actively developed as batteries used in computers, mobile devices such as mobile phones, video cameras, satellites, and the like. As a packaging material for such LIBs, a laminate composed of, for example, a substrate layer, barrier layer, and sealant layer has been used; this is because it has the advantage that, unlike conventionally used metal cans, it is lightweight, and the shape of the batteries can be freely selected.

As contents of the battery, an LIB includes a positive electrode material and a negative electrode material, as well as an electrolyte solution in which a lithium salt is dissolved in an aprotic solvent (e.g., propylene carbonate, ethylene carbonate, dimethyl carbonate, diethyl carbonate, or ethyl methyl carbonate) or an electrolyte layer of a polymer gel impregnated with the electrolyte solution. When such a highly penetrating solvent passes through the sealant layer, the lamination strength between the barrier layer and the sealant layer is reduced, causing delamination, and finally resulting in leakage of the electrolyte solution. Moreover, although LiPF6, LiBF4, and like materials are used as lithium salts (electrolytes of the batteries), hydrolysis reaction of such a salt with moisture produces hydrofluoric acid, which corrodes the barrier layer, reducing the lamination strength. The battery packaging materials are thus required to have resistance to the electrolyte.

Furthermore, LIBs must have resistance to harsher environments, based on the assumption that they will be used in various environments. For example, when LIBs are used in mobile devices, the LIBs are required to have liquid leakage resistance in environments at a temperature as high as 60 to 70°C, such as in vehicles. LIBs are also required to have water resistance in order to prevent water from entering them, based on the assumption that they will be used in mobile phones and be accidentally dropped into water.

Under such circumstances, various packaging materials for lithium-ion batteries with improved electrolyte solution resistance have been proposed (for example, see Patent Literature 1 and 2).

### Citation List

### Patent Literature

PTL 1: WO2014/123183
PTL 2: WO2017/187904

### Summary of Invention

### Technical Problem

However, the proposed adhesive compositions are still insufficient in terms of moldability. Specifically, when such a packaging material is processed into the shape of a pouch, the adhesive layer may not be able to follow the extension of the substrates, and may peel off. Moreover, the adhesion of the adhesives after curing in a high-temperature environment may be poor, or breakage may occur due to pulling force. Thus, the proposed adhesive compositions are also still insufficient in terms of heat resistance and durability.

An object of the present invention is to provide an adhesive composition that exhibits good adhesion to a polyolefin resin substrate and a metal substrate and good electrolyte solution resistance, has remarkable followability to a substrate, is capable of bonding at low temperature, and satisfies the storage modulus and elongation at break required for exhibiting excellent heat resistance and durability after curing. Another object of the present invention is to provide a packaging material for batteries, the packaging material comprising an adhesive layer of the adhesive composition, and a battery that uses the packaging material.

### Solution to Problem

The present inventors conducted extensive research to achieve the above objects, and found that blending two types of modified polyolefins having different melting points and a thermoplastic resin is effective. Thus, the present inventors have proposed the following invention.

An adhesive composition comprising:
a modified polyolefin (A1);
a modified polyolefin (A2) containing propylene in an amount of 30 mol% or more and having a melting point higher than that of the modified polyolefin (A1); and
a thermoplastic resin (B) , wherein
the molar ratio of propylene/1-butene in the modified polyolefin (A1) is 98 to 40/2 to 60, and the molar ratio of propylene/1-butene in the modified polyolefin (A2) is 99 to 55/1 to 45,and wherein the thermoplastic resin (B) is a styrene-based elastomer or olefin-based elastomer.

Moreover, it is preferable that the difference between the melting point of the modified polyolefin (A1) and the melting point of the modified polyolefin (A2) is 3 to 55°C, that the melting points are in the range of 50 to 160°C, and that the modified polyolefin (A1) and the modified polyolefin (A2) each have an acid value of 2 to 50 mgKOH/g.

The thermoplastic resin (B) may be an acid-modified thermoplastic resin and preferably has an acid value of 2 to 50 mgKOH/g. The thermoplastic resin (B) is also preferably a styrene-based thermoplastic resin, and the mass ratio of the thermoplastic resin (B) is preferably 5 to 30 parts by mass, based on 100 parts by mass of the total amount of the modified polyolefin (A1) and the modified polyolefin (A2).

The adhesive composition preferably further comprises a curing agent (C), and the curing agent (C) is preferably an epoxy curing agent or an isocyanate curing agent.

The adhesive composition described in any of the above can be used for bonding a polyolefin resin substrate and a metal substrate.

A laminate comprising a polyolefin resin substrate and a metal substrate bonded with the adhesive composition described in any of the above, and a packaging material for a lithium-ion battery, comprising the laminate as a constituent member.

### Advantageous Effects of Invention

Since the adhesive composition of the present invention comprises two types of modified polyolefins having different melting points and a thermoplastic resin, and has remarkable followability to a substrate, the adhesive composition has excellent processing properties, such as moldability (deep drawability). The adhesive composition also exhibits good adhesion to a polyolefin resin substrate and a metal substrate, and good electrolyte solution resistance even if bonding is performed at a low temperature of 80°C or less, at which the effect of thermal shrinkage of a polyolefin substrate is small, and even if aging is performed at a low temperature of 40°C or less; and the composition shows excellent heat resistance and durability after curing.

### Description of Embodiments

Embodiments of the present invention are described in detail below.

### Modified Polyolefins (A1) and (A2)

The modified polyolefins (A1) and (A2) used in the present invention are stated in the claims, and are preferably those obtained by modifying at least one of polyethylene, polypropylene, and a propylene-α-olefin copolymer. Moreover, the modified polyolefins (A1) and (A2) are more preferably those obtained by modifying polypropylene or a propylene-α-olefin copolymer.

The propylene-α-olefin copolymer mainly comprises propylene that is copolymerized with an α-olefin. Examples of α-olefins include ethylene, propylene, 1-butene, 1-heptene, 1-octene, 4-methyl-1-pentene, vinyl acetate, and the like. These can be used singly, or in a combination of two or more. The molar ratio of the propylene component to the α-olefin component in the propylene-α-olefin copolymer is preferably 99 to 40/1 to 60, more preferably 98 to 45/2 to 55, and even more preferably 94 to 60/6 to 40. The total amount of the propylene component and the 1-butene component in the propylene-α-olefin copolymer is preferably 72 mol% or more, more preferably 80 mol% or more, even more preferably 90 mol% or more, and most preferably 100 mol%. The ethylene content in the propylene-α-olefin copolymer is preferably low.

The propylene content in the modified polyolefin (A1) is preferably 28 mol% or more, more preferably 40 mol% or more, even more preferably 50 mol% or more, and particularly preferably 65 mol% or more. The propylene content in the modified polyolefin (A1) is also preferably 100 mol% or less, more preferably 98 mol% or less, and particularly preferably 90 mol% or less. The presence of propylene in an amount of 30 mol% or more contributes to good adhesion to a propylene substrate. Moreover, the modified polyolefin (A1) may contain an α-olefin component in addition to propylene.

The molar ratio of propylene/1-butene in the modified polyolefin (A1) is 98 to 40/2 to 60. The molar ratio proportion of propylene is more preferably 50% or more, even more preferably 60% or more, and still even more preferably 70% or more. When the molar ratio proportion of propylene is 40% or more, excellent adhesion to a polyolefin substrate, in particular, a polypropylene substrate, can be exhibited. The molar ratio proportion of propylene is also more preferably 95% or less, even more preferably 930 or less, and most preferably 90% or less. Further, when the molar ratio proportion of 1-butene is 2% or more, the modified polyolefin becomes flexible, which improves processing properties, such as followability to a substrate. The molar ratio proportion of 1-butene is more preferably 5% or more, even more preferably 7% or more, and most preferably 10% or more. The molar ratio proportion of 1-butene is also more preferably 50% or less, even more preferably 40% or less, and most preferably 300 or less.

The propylene content in the modified polyolefin (A2) is preferably 30 mol% or more, more preferably 40 mol% or more, even more preferably 45 mol% or more, particularly preferably 60 mol% or more, and most preferably 70 mol% or more. The propylene content in the modified polyolefin (A2) is also preferably 100 mol% or less, more preferably 99 mol% or less, and particularly preferably 97 mol% or less. Due to the presence of propylene in an amount of 30 mol% or more, good adhesion to a propylene substrate tends to be exhibited. Moreover, the modified polyolefin (A2) may contain an α-olefin component in addition to propylene.

The molar ratio of propylene/1-butene in the modified polyolefin (A2) is 99 to 55/1 to 45. The molar ratio proportion of propylene is 550 or more, preferably 65% or more, and more preferably 76% or more in view that
excellent adhesion to a polyolefin substrate, in particular, a polypropylene substrate, can be exhibited. The molar ratio proportion of propylene is also preferably 97% or less, more preferably 94% or less, and most preferably 92% or less. Further, when the molar ratio proportion of 1-butene is 1% or more, the modified polyolefin becomes flexible, which improves processing properties, such as followability to a substrate. The molar ratio proportion of 1-butene is more preferably 3% or more, even more preferably 6% or more, and most preferably 8% or more. The molar ratio proportion of 1-butene is also more preferably 45% or less, even more preferably 35% or less, and most preferably 240 or less.

Specific examples of the modification of the modified polyolefins (A1) and (A2) used in the present invention include acid modification, chlorine modification, acrylic modification, hydroxy modification, and the like. The modified polyolefins (A1) and (A2) are each required to be prepared through one or more of these modifications. Moreover, the modified polyolefins (A1) and (A2) are each particularly preferably an acid-modified polyolefin.

The modified polyolefins (A1) and (A2) are preferably polyolefins acid-modified with an α,β-unsaturated carboxylic acid and/or an acid anhydride thereof. Examples of α,β-unsaturated carboxylic acids and acid anhydrides thereof include maleic acid, itaconic acid, citraconic acid, and acid anhydrides thereof. Among these, acid anhydrides are preferable, and maleic anhydride is more preferable. These α,β-unsaturated carboxylic acids and acid anhydrides thereof can be used singly, or in a combination of two or more.

The modified polyolefins (A1) and (A2) each preferably have an acid value of 2 to 50 mgKOH/g, more preferably 3 to 45 mgKOH/g, even more preferably 5 to 40 mgKOH/g, and particularly preferably 7 to 35 mgKOH/g, in terms of adhesion to a polyolefin resin substrate and a metal substrate, and electrolyte solution resistance. If the acid value is less than 2 mgKOH/g, the compatibility with a curing agent may be poor. This may decrease the crosslinking density and reduce the adhesion strength and the chemical resistance (electrolyte solution resistance). If the acid value is too high, the molecular weight may be low, and the cohesive force may be weak, resulting in decreased adhesion strength and decreased chemical resistance (electrolyte solution resistance). Further, the production efficiency is also reduced. Thus, an acid value that is too high is unfavorable. The acid values of the modified polyolefins (A1) and (A2) may be the same or different, but are preferably the same.

The acid values of the modified polyolefins (A1) and (A2) can be adjusted by the amounts of α,β-unsaturated carboxylic acid, acid anhydride of α,β-unsaturated carboxylic acid, and radical generator used.

The modified polyolefins (A1) and (A2) are required to have different melting points. Using the modified polyolefin with a high melting point and the modified polyolefin with a low melting point in combination allows for good adhesion to a polyolefin resin substrate and a metal substrate, and good chemical resistance even if bonding is performed at a low temperature of 80°C or less, at which the effect of thermal shrinkage of a polyolefin substrate is small, and even if aging is performed at a low temperature of 40°C or less. Such use also achieves excellent heat resistance after curing.

The modified polyolefins (A1) and (A2) have different melting points, and the modified polyolefin (A2) has a melting point higher than that of the modified polyolefin (A1). The difference between the melting point of the modified polyolefin (A1) and the melting point of the modified polyolefin (A2) is preferably 3 to 55°C, more preferably 4 to 45°C, and even more preferably 5 to 30°C. If the difference in melting point is outside the above range, it may be difficult to achieve all of low-temperature processability, electrolyte solution resistance, and durability under high-temperature conditions.

The melting point (Tm) of the modified polyolefin (A1) is preferably within the range of 50 to 155°C, more preferably 55 to 120°C, even more preferably 60 to 100°C, and most preferably 70 to 90°C. If the melting point is too low, the cohesive force derived from crystals may be weak, resulting in poor adhesion and poor chemical resistance. If the melting point is too high, the solution stability and the fluidity may be low, and operability during bonding may thus be a problem.

The melting point (Tm) of the modified polyolefin (A2) is preferably within the range of 55 to 160°C, more preferably 60 to 125°C, even more preferably 65 to 105°C, and most preferably 75 to 95°C. If the melting point is too low, the cohesive force derived from crystals may be weak, resulting in poor adhesion and poor chemical resistance. If the melting point is too high, the solution stability and the fluidity may be low, and operability during bonding may thus be a problem.

The mass ratio of the modified polyolefin (A1)/the modified polyolefin (A2) is 99 to 21/1 to 79, preferably 75 to 25/25 to 75, and more preferably 60 to 40/40 to 60. When the mass ratio is within the above range, low-temperature processability, electrolyte solution resistance, and durability under high-temperature conditions can all be exhibited.

The heat of fusion (ΔH) of the modified polyolefin (A1) and the heat of fusion (ΔH) of the modified polyolefin (A2) are each preferably within the range of 1 to 60 J/g, more preferably 3 to 50 J/g, and most preferably 5 to 40 J/g. If the heat of fusion is too low, the cohesive force derived from crystals may be weak, resulting in poor adhesion and poor chemical resistance. If the heat of fusion is too high, the solution stability and the fluidity may be low, and operability during bonding may thus be a problem.

The method for producing the modified polyolefins (A1) and (A2) is not particularly limited. Examples of the method include a radical grafting reaction in which a radical species is formed in a polymer serving as a main chain, and unsaturated carboxylic acid and acid anhydride are graft-polymerized using the radical species as a polymerization starting point; and the like.

Examples of radical generators include, but are not limited to, organic peroxides, azonitriles, and the like. It is preferable to use an organic peroxide. Examples of organic peroxides include, but are not limited to, di-tert-butylperoxy phthalate, tert-butyl hydroperoxide, dicumyl peroxide, benzoyl peroxide, tert-butylperoxy benzoate, tert-butyl peroxy-2-ethylhexanoate, tert-butyl peroxy pivalate, methyl ethyl ketone peroxide, di-tert-butyl peroxide, lauroyl peroxide, and the like. Examples of azonitriles include azobisisobutyronitrile, azobisisopropionitrile, and the like.

The weight average molecular weight (Mw) of the modified polyolefin (A1) and the weight average molecular weight (Mw) of the modified polyolefin (A2) are each preferably within the range of 10,000 to 200,000, more preferably 20,000 to 180,000, even more preferably 30,000 to 160,000, particularly preferably 40,000 to 140,000, and most preferably 50,000 to 110,000. If the weight average molecular weight is too low, the cohesive force may be weak, resulting in poor adhesion. If the weight average molecular weight is too high, the fluidity may be low, and operability during bonding may thus be a problem. A weight average molecular weight within the above range is preferable, because a curing reaction with a curing agent is utilized.

### Thermoplastic Resin (B)

The thermoplastic resin (B) used in the present invention is stated in the claims and a thermoplastic resin having a styrene skeleton can be used. Specific examples of styrene-based thermoplastic resins include styrene-based elastomers, such as styrene-ethylene-butylene-styrene copolymer resins, styrene-ethylene-propylene-styrene copolymer resins, styrene-butadiene copolymer resins, styrene-ethylene copolymer resins, styrene-butylene copolymer resins, styrene-ethylene-styrene copolymer resins, and styrene-butylene-styrene copolymer resins; and the like. Examples of thermoplastic resins not having a styrene skeleton include olefin-based elastomers, such as ethylene-propylene copolymer resins, ethylene-butene copolymer resins, ethylene-vinyl acetate copolymer resins, and ethylene-ethyl acrylate copolymer resins; and the like. Among these, styrene-based elastomers such as styrene-ethylene-butylene-styrene copolymer resins and styrene-ethylene-propylene-styrene are preferable in terms of compatibility with the modified polyolefins (A1) and (A2) and heat resistance.

The thermoplastic resin (B) may have an acid value. The thermoplastic resin (B) preferably has an acid value within the range of 2 to 50 mgKOH/g, more preferably 3 to 45 mgKOH/g, even more preferably 5 to 40 mgKOH/g, and particularly preferably 7 to 35 mgKOH/g. Moreover, when the thermoplastic resin (B) is acid-modified, the thermoplastic resin (B) is preferably maleic anhydride-modified. An acid value of the thermoplastic resin (B) within the above range improves compatibility with the modified polyolefins (A1) and (A2) and the curing agent (C), and increases cohesive force, adhesion, and heat resistance due to crosslinking with the curing agent (C).

The amount of the thermoplastic resin (B) is preferably 3 to 60 parts by mass, more preferably 5 to 40 parts by mass, even more preferably 8 to 30 parts by mass, and particularly preferably 10 to 20 parts by mass, based on 100 parts by mass of the total amount of the modified polyolefins (A1) and (A2). Since the amount of the thermoplastic resin (B) is within the above range, the adhesive composition has appropriate flexibility and has both processing properties such as deep drawability and adhesion to a polyolefin substrate.

### Adhesive Composition

The adhesive composition of the present invention comprises the modified polyolefins (A1) and (A2), and the thermoplastic resin (B). The adhesive composition of the present invention may further comprise a curing agent (C). The total amount of the modified polyolefins (A1) and (A2), and the thermoplastic resin (B) in the nonvolatile components of the adhesive composition is preferably 60 mass% or more, more preferably 70 mass% or more, and most preferably 80 mass% or more.

### Curing Agent (C)

Examples of the curing agent (C) used in the present invention include, but are not limited to, epoxy curing agents, isocyanate curing agents, carbodiimide-based curing agents, oxazoline-based curing agents, and the like. The curing agent (C) is preferably an epoxy curing agent or an isocyanate curing agent.

The epoxy curing agent used in the present invention is not particularly limited, and epoxy resins and compounds derived from these can be preferably used. Specific examples include glycidyl amine-type epoxy resins; glycidyl ether-type epoxy resins; glycidyl esters, such as hexahydrophthalic acid glycidyl ester and dimer acid glycidyl ester; alicyclic or aliphatic epoxides, such as 3,4-epoxycyclohexylmethyl 3,4-epoxycyclohexanecarboxylate, epoxidized polybutadiene, and epoxidized soybean oil; and the like. These can be used singly, or in a combination of two or more.

Specific examples of glycidyl amine-type epoxy resins that can be used in the present invention include, but are not limited to, glycidyl amine-based resins, such as tetraglycidyl diaminodiphenylmethane, triglycidyl para-aminophenol, tetraglycidyl bis-aminomethyl cyclohexanone, and N,N,N',N'-tetraglycidyl-m-xylenediamine. Among these, N,N,N',N'-tetraglycidyl-m-xylenediamine is preferable. These glycidyl amine-type epoxy resins can be used singly, or in a combination of two or more.

Specific examples of glycidyl ether-type epoxy resins include, but are not limited to, phenol novolac-type epoxy resins and cresol novolac-type epoxy resins. They are preferable in terms of adhesion to a metal substrate and chemical resistance. These glycidyl ether-type epoxy resins can be used singly, or in a combination of two or more.

In terms of adhesion to a metal substrate and chemical resistance, a glycidyl amine-type epoxy resin and a glycidyl ether-type epoxy resin are preferably used in combination as the epoxy curing agent used in the present invention. The mass ratio of the glycidyl amine-type epoxy resin to the glycidyl ether-type epoxy resin is preferably 1 to 30/99 to 70, more preferably 5 to 20/95 to 80, and even more preferably 8 to 15/92 to 85.

The isocyanate curing agent used in the present invention is not particularly limited, and diisocyanates, triisocyanates, and compounds derived from these can be preferably used. Examples include diisocyanates, such as 2,4-tolylenediisocyanate, 2,6-tolylenediisocyanate, xylylene diisocyanate, diphenylmethane diisocyanate, isophorone diisocyanate, 1,5-naphthalene diisocyanate, hexamethylene diisocyanate, bis(4-isocyanatecyclohexyl)methane, and hydrogenated diphenylmethane diisocyanate; compounds derived from the diisocyanates, such as isocyanurates, adducts, biurets, uretdiones, and allophanates of the diisocyanates, and prepolymers having isocyanate residues (low polymers obtained from a diisocyanate and a polyol); triglycidyl isocyanurate; and composites thereof. These can be used singly, or in combination of two or more.

Among these, isocyanurates of the diisocyanate compounds are preferable as the isocyanate curing agent used in the present invention in terms of excellent electrolyte solution resistance.

Examples of the curing agent (C) used in the present invention also include carbodiimide compounds, oxazoline compounds, coupling agents, and the like in addition to the epoxy curing agents and isocyanate curing agents. Examples of carbodiimide compounds include monocarbodiimide compounds, such as dimethylcarbodiimide, diisopropylcarbodiimide, dicyclohexylcarbodiimide, t-butylisopropylcarbodiimide, diphenylcarbodiimide, and di-β-naphthylcarbodiimide; polycarbodiimide compounds that can be produced by subjecting an organic diisocyanate, such as an aliphatic diisocyanate, an aromatic diisocyanate, or alicyclic diisocyanate, to a decarboxylation condensation reaction without a solvent or in an inert solvent in the presence of a condensation catalyst; and the like. Examples of oxazoline compounds include monooxazoline compounds, such as 2-oxazoline, 2-methyl-2-oxazoline, 2-phenyl-2-oxazoline, 2,5-dimethyl-2-oxazoline, and 2,4-diphenyl-2-oxazoline; dioxazoline compounds, such as 2,2'-(1,3-phenylene)-bis(2-oxazoline), 2,2'-(1,2-ethylene)-bis(2-oxazoline), 2,2'-(1,4-butylene)-bis(2-oxazoline), and 2,2'-(1,4-phenylene)-bis(2-oxazoline); and the like. Examples of coupling agents include silane coupling agents, titanate coupling agents, and the like.

When the adhesive composition of the present invention contains the curing agent (C), the amount of the curing agent (C) is preferably within the range of 0.5 to 40 parts by mass, more preferably 1 to 35 parts by mass, even more preferably 2 to 30 parts by mass, and particularly preferably 3 to 25 parts by mass, based on 100 parts by mass of the total amount of the modified polyolefins (A1) and (A2) ((A1)+(A2)). If the content is too low, sufficient curing effects may not be obtained, resulting in poor adhesion and poor chemical resistance. If the content is too high, the pot life properties and the adhesion may be reduced, and the followability may also be reduced, causing pinholes during molding. Furthermore, an amount of the curing agent (C) exceeding the above range is unfavorable from the viewpoint of cost.

The adhesive composition according to the present invention may comprises additives, such as tackifiers, plasticizers, curing accelerators, flame retardants, pigments, and antiblocking agents, in addition to the modified polyolefins (A1) and (A2), the thermoplastic resin (B), and the curing agent (C), as long as the performance of the present invention is not impaired.

The adhesive composition according to the present invention may further contain an organic solvent as long as the performance of the present invention is not impaired. The organic solvent is not particularly limited as long as it is a solvent for dissolving or dispersing the modified polyolefins (A1) and (A2), the thermoplastic resin (B), and the curing agent (C). Examples of organic solvents include low-polarity solvents, such as aliphatic hydrocarbons and alicyclic hydrocarbons; high-polarity solvents, such as alcohol-based solvents, ether-based solvents, ketone-based solvents, and ester-based solvents; and the like. It is preferable to use a low-polarity solvent and a high-polarity solvent in combination in terms of storage stability and pot life. The content ratio of the high-polarity solvent to the low-polarity solvent is preferably 50 to 3/50 to 97 (mass ratio), more preferably 45 to 5/55 to 95, and even more preferably 40 to 10/60 to 90.

Examples of aliphatic hydrocarbons include hexane, heptane, octane, decane, and the like. Examples of alicyclic hydrocarbons include cyclohexane, cyclohexene, methylcyclohexane, ethylcyclohexane, and the like. Examples of alcohol-based solvents include methanol, ethanol, isopropyl alcohol, butanol, pentanol, hexanol, propanediol, and the like. Examples of ether-based solvents include ethylene glycol mono-n-butyl ether, ethylene glycol mono-iso-butyl ether, ethylene glycol mono-tert-butyl ether, diethylene glycol mono-n-butyl ether, diethylene glycol mono-iso-butyl ether, triethylene glycol mono-n-butyl ether, tetraethylene glycol mono-n-butyl ether, and the like. Examples of ketone-based solvents include acetone, methyl isobutyl ketone, methyl ethyl ketone, pentanone, hexanone, cyclohexanone, isophorone, acetophenone, and the like. Examples of ester-based solvents include methyl acetate, ethyl acetate, butyl acetate, methyl propionate, butyl formate, and the like.

Among the above organic solvents, cyclohexane, which is an alicyclic hydrocarbon, or the like is preferable as a low-polarity solvent; methyl ethyl ketone, which is a ketone-based solvent, or the like is preferable as a high-polarity solvent; and a mixed solvent of cyclohexane and methyl ethyl ketone is particularly more preferable. The amount of these organic solvents is preferably within the range of 80 to 2000 parts by mass, more preferably 90 to 1600 parts by mass, even more preferably 100 to 1200 parts by mass, and particularly preferably 110 to 800 parts by mass, based on 100 parts by mass of the total amount of the modified polyolefins (A1) and (A2), and the thermoplastic resin (B). When the amount is within the above range, the solution state and pot life properties are likely to be good.

### Laminate

The laminate of the present invention is one in which a polyolefin resin substrate and a metal substrate are laminated using the adhesive composition according to the present invention.

The lamination may be performed using a known laminate production technique. Although there is no particular limitation, for example, the adhesive composition may be applied to the surface of a metal substrate using a suitable coating means, such as a roll coater or a bar coater, followed by drying. After drying, a polyolefin resin substrate may be laminate-bonded to the coating surface while the layer of the adhesive composition (adhesive layer) formed on the surface of the metal substrate is in a molten state, to thus obtain a laminate.

The thickness of the adhesive layer formed from the adhesive composition is not particularly limited, and is preferably 0.5 to 10 µm, more preferably 0.8 to 9.5 µm, and even more preferably 1 to 9 µm.

### Polyolefin Resin Substrate

The polyolefin resin substrate may be suitably selected from previously known polyolefin resins. For example, polyethylene, polypropylene, ethylene-propylene copolymers, and the like may be used without limitation. Among these, it is preferable to use a cast polypropylene film (also referred to below as "CPP"). The thickness of the polyolefin resin substrate is not particularly limited, and is preferably 20 to 100 µm, more preferably 25 to 95 µm, and even more preferably 30 to 90 µm. The polyolefin resin substrate may contain a pigment and various additives or may be subjected to surface treatment, if necessary.

### Metal Substrate

Examples of the metal substrate include, but are not limited to, various metals, such as aluminum, copper, steel, chromium, zinc, duralumin, and die-cast metals; and alloys thereof. The metal substrate may have any shape, such as a metal foil, a rolled steel plate, a panel, a pipe, a can, or a cap. In general, aluminum foil is preferable in terms of processability etc. The metal substrate is generally used in the form of a sheet having a thickness of 0.01 to 10 mm, and preferably 0.02 to 5 mm, although this varies depending on the purpose of use.

The surface of such a metal substrate may be subjected to surface treatment beforehand, or may be untreated. In either case, comparable effects can be exhibited.

### Examples

Examples are given below to illustrate the present invention in more detail; however, the present invention is not limited to these Examples.

### Production Examples of Modified Polyolefin (A)

### Production Example 1

100 parts by mass of a propylene-1-butene copolymer (Tm: 80°C, propylene/1-butene = 80/20 (molar ratio)), 233 parts by mass of toluene, 20 parts by mass of maleic anhydride, and 5 parts by mass of di-tert-butyl peroxide were placed in a 1-L autoclave. The mixture was heated to 140°C and then further stirred for 1 hour (referred to here as "reacted" for 1 hour). Thereafter, the resulting reaction mixture was cooled to 100°C, poured into a container containing 717 parts by mass of toluene and 950 parts by mass of methyl ethyl ketone pre-warmed to 40°C with stirring, cooled to 40°C, further stirred for 30 minutes, and further cooled to 25°C to precipitate resin (here, the operation of pouring the reaction mixture into solvents such as methyl ethyl ketone with stirring and cooling the reaction mixture to precipitate resin is referred to as "reprecipitation"). The slurry liquid containing the resin was then centrifuged to separate it into an acid-modified propylene-1-butene copolymer in which maleic anhydride was graft-polymerized, and (poly)maleic anhydride and low-molecular-weight substances.

Further, the acid-modified propylene-1-butene copolymer removed by centrifugation was placed in a new container containing 2000 parts by mass of methyl ethyl ketone pre-warmed to 25°C with stirring, followed by continuous stirring for 1 hour. Thereafter, the slurry liquid was centrifuged to further separate it into an acid-modified propylene-1-butene copolymer, and (poly)maleic anhydride and low-molecular-weight substances. This operation was repeated twice for purification (here, the operation of adding the acid-modified propylene-1-butene copolymer removed by centrifugation to methyl ethyl ketone with stirring and performing centrifugation again to enhance purification is referred to as "reslurry").

After purification, drying was performed at 70°C under reduced pressure for 5 hours, thereby obtaining a maleic anhydride-modified propylene-1-butene copolymer (PO-1, acid value: 25 mgKOH/g, weight average molecular weight: 60,000, Tm: 80°C), which is a modified polyolefin.

### Production Example 2

A maleic anhydride-modified propylene-1-butene copolymer (PO-2, acid value: 25 mgKOH/g, weight average molecular weight: 60,000, Tm: 90°C), which is a modified polyolefin, was obtained in the same manner as in Production Example 1, except that a propylene-1-butene copolymer (Tm: 90°C, propylene/1-butene = 85/15 (molar ratio)) was used in place of the propylene-1-butene copolymer (Tm: 80°C) used in Production Example 1, and that the reslurry was performed once, and the amount of methyl ethyl ketone used in the reslurry was 1000 parts by mass.

### Production Example 3

A maleic anhydride-modified propylene-1-butene copolymer (PO-3, acid value: 5 mgKOH/g, weight average molecular weight: 90,000, Tm: 80°C), which is a modified polyolefin, was obtained in the same manner as in Production Example 1, except that the amounts of maleic anhydride and di-tert-butyl peroxide were respectively 3 parts by mass and 1 part by mass, and that the reslurry was performed once, and the amount of methyl ethyl ketone used in the reslurry was 1000 parts by mass.

### Production Example 4

A maleic anhydride-modified ethylene-propylene copolymer (PO-4, acid value: 25 mgKOH/g, weight average molecular weight: 60,000, Tm: 100°C), which is a modified polyolefin, was obtained in the same manner as in Production Example 1, except that an ethylene-propylene copolymer (Tm: 100°C, ethylene/propylene = 75/25 (molar ratio)) was used in place of the propylene-1-butene copolymer used in Production Example 1.

**Table 1**

| | | Example 1 | Example 2 | Example 3 | Example 4 | Example 5 | Example 6 | Example 7 | Example 8 | Example 9 | Example 10 | Example 11 |
|---|---|---|---|---|---|---|---|---|---|---|---|---|
| Modified polyolefin (A) (parts by mass) | PO-1 | 90 | 79 | 50 | 21 | 15 | 15 | 21 | 21 | | 50 | 50 |
| | PO-2 | 10 | 21 | 50 | 79 | 85 | 85 | 79 | 79 | 50 | 50 | 50 |
| | PO-3 | | | | | | | | | 50 | | |
| | PO-4 | | | | | | | | | | | |
| Acid-modified thermoplastic resin (B) (parts by mass) | B-1 | 15 | 15 | 15 | 15 | 15 | | | | 15 | | |
| | B-2 | | | | | | | | | | 15 | |
| | B-3 | | | | | | | | | | | 15 |
| | B-4 | | | | | | | | | | | |
| | B-5 | | | | | | 15 | | | | | |
| | B-6 | | | | | | | 15 | | | | |
| | B-7 | | | | | | | | 15 | | | |
| Curing agent (C) (parts by mass) | C-1 | 3.8 | 3.8 | 3.8 | 3.8 | 3.8 | 3.8 | 3.8 | 3.8 | 3.8 | 3.8 | 3.8 |
| | C-2 | 0.5 | 0.5 | 0.5 | 0.5 | 0.5 | 0.5 | 0.5 | 0.5 | 0.5 | 0.5 | 0.5 |
| | C-3 | | | | | | | | | | | |
| Pot life properties | | A | A | A | A | A | E | D | D | A | B | A |
| Deep drawability | | A | A | A | A | B | A | A | A | A | A | A |
| Initial adhesion | | A | A | A | C | C | D | D | D | A | C | C |
| Electrolyte solution resistance at 85°C | | C | B | A | B | C | D | D | D | A | B | B |
| Elongation at break | 25°C | A | A | A | A | B | B | B | B | A | B | A |
| | 85°C | B | B | A | A | C | B | B | C | A | B | B |
| Storage modulus | 80°C | C | B | A | A | B | B | B | B | A | A | A |
| | 110°C | C | C | A | A | C | B | B | B | A | A | A |

**Table 2**

| | | Example 12 | Example 13 | Example 14 | Example 15 | Comparative Example 1 | Comparative Example 2 | Comparative Example 3 | Comparative Example 4 | Comparative Example 5 | Comparative Example 6 |
|---|---|---|---|---|---|---|---|---|---|---|---|
| Modified polyolefin (A) (parts by mass) | PO-1 | 50 | 50 | 50 | 50 | 100 | | | 50 | 50 | 50 |
| | PO-2 | 50 | 50 | 50 | 50 | | 100 | | 50 | | |
| | PO-3 | | | | | | | | | 50 | |
| | PO-4 | | | | | | | | | | 50 |
| Acid-modified thermoplastic resin (B) (parts by mass) | B-1 | | 5 | 25 | 15 | 15 | 15 | 15 | | 15 | 15 |
| | B-2 | | | | | | | | | | |
| | B-3 | | | | | | | | | | |
| | B-4 | 15 | | | | | | | | | |
| | B-5 | | | | | | | | | | |
| | B-6 | | | | | | | | | | |
| | B-7 | | | | | | | | | | |
| Curing agent (C) (parts by mass) | C-1 | 3.8 | 3.8 | 3.8 | | 3.8 | 3.8 | 3.8 | 3.8 | 3.8 | 3.8 |
| | C-2 | 0.5 | 0.5 | 0.5 | | 0.5 | 0.5 | 0.5 | 0.5 | 0.5 | 0.5 |
| | C-3 | | | | 5 | | | | | | |
| Pot life properties | | A | A | B | C | A | A | E | A | A | C |
| Deep drawability | | A | C | B | A | A | A | B | D | A | D |
| Initial adhesion | | C | A | B | A | C | E | E | A | C | D |
| Electrolyte solution resistance at 85°C | | B | A | B | B | E | E | E | A | E | E |
| Elongation at break | 25°C | A | A | A | A | A | A | A | D | A | D |
| | 85°C | A | B | A | A | A | A | A | E | A | E |
| Storage modulus | 80°C | A | B | A | A | C | B | D | A | C | C |
| | 110°C | A | B | A | A | C | B | D | B | C | D |

The thermoplastic resins (B) shown in Tables 1 and 2 are as follows.
B-1: Kraton (registered trademark) FG1924 (maleic anhydride-modified styrene-ethylene-butylene-styrene resin, acid value: 11 mgKOH/g) produced by Kraton Corporation
B-2: Tuftec (registered trademark) M1911 (maleic anhydride-modified styrene-ethylene-butylene-styrene resin, acid value: 2 mgKOH/g) produced by Asahi Kasei Corp.
B-3: Kraton (registered trademark) FG1901 (maleic anhydride-modified styrene-ethylene-butylene-styrene resin, acid value: 19 mgKOH/g) produced by Kraton Corporation
B-4: Tafmer (registered trademark) MH7020(maleic anhydride-modified ethylene-1-butene copolymer, acid value: 11 mgKOH/g)
B-5: Tuftec (registered trademark) H1517 (styrene-ethylene-butylene-styrene resin, acid value: 0 mgKOH/g) produced by Asahi Kasei Corp.
B-6: Kraton (registered trademark) G1730 (styrene-ethylene-propylene-styrene resin, acid value: 0 mgKOH/g) produced by Kraton Corporation
B-7: Tafmer (registered trademark) DF640 (ethylene-butadiene resin, acid value: 0 mgKOH/g) produced by Mitsui Chemicals, Inc.

### Example 1

90 parts by mass of the maleic anhydride-modified propylene-1-butene copolymer (PO-1) obtained in Production Example 1, 10 parts by mass of the maleic anhydride-modified propylene-1-butene copolymer (PO-2), 15 parts by mass of thermoplastic resin Kraton FG1924 (B-1), 424 parts by mass of cyclohexane, and 228 parts by mass of methyl ethyl ketone were placed in a 500-mL four-necked flask equipped with a water-cooled reflux condenser and a stirrer. The mixture was heated to 80°C with stirring, followed by continuous stirring for 1 hour. Thereafter, 3.8 parts by mass of a curing agent (C-1) and 0.5 parts by mass of a curing agent (C-2) were added, thereby obtaining an adhesive composition. A laminate was produced using this adhesive composition in the following manner. Table 1 shows evaluation results.

### Examples 2 to 15 and Comparative Examples 1 to 6

The compositions and laminates of Examples 2 to 15 and Comparative Examples 1 to 6 were obtained in the same manner as in Example 1, except that the acid-modified propylene-1-butene copolymer(s) and/or the acid-modified ethylene-propylene copolymer, and the thermoplastic resin, shown in Tables 1 and 2 were used. Tables 1 and 2 show the amounts of the components and evaluation results.

### Production of Laminate Comprising Metal Substrate and Polyolefin Resin Substrate

An aluminum foil (produced by Sumikei Aluminum Foil Co., Ltd., 8079-0, thickness: 40 µm) was used as a metal substrate, and a cast polypropylene film (PYLEN (registered trademark) Film-CT produced by Toyobo Co., Ltd., thickness: 40 µm) (also referred to below as "CPP") was used as a polyolefin resin substrate.

An obtained adhesive composition was applied to the metal substrate with a bar coater so that the film thickness of the adhesive layer after drying was 3 µm. The coating surface was dried with a hot air dryer at 100°C for 1 minute to obtain the metal substrate on which an adhesive layer having a film thickness of 3 um was laminated. The polyolefin resin substrate was laminated on the surface of the adhesive layer at a laminating temperature of 80°C, 0.3 Mpa, and 1 m/min, using a tabletop test laminator (SA-1010-S) produced by Tester Sangyo Co., Ltd., followed by aging at 40°C and 50% RH for 5 days, thereby obtaining a laminate.

The adhesion, electrolyte solution resistance, moldability, elongation at break, and storage modulus of each of the obtained laminates were evaluated. Tables 1 and 2 show the results.

The curing agents shown in Tables 1 and 2 are as follows.
C-1: glycidyl ether-type epoxy resin: jER (registered trademark) 152 (produced by Mitsubishi Chemical Corporation)
C-2: glycidyl amine-type epoxy resin: TETRAD (registered trademark)-X (produced by Mitsubishi Gas Chemical Company, Inc.)
C-3: multifunctional polyisocyanate: Desmodur (registered trademark) N3300 (produced by Covestro)

Analytical measurement and evaluation of the thus-obtained modified polyolefins and adhesive compositions were performed in the following manner.

### Measurement of Acid Value

The acid value (mgKOH/g) in the present invention refers to the amount of KOH required to neutralize 1 g of a sample, and was measured in accordance with the test method of JIS K0070 (1992). Specifically, 1 g of a modified polyolefin or a thermoplastic resin was dissolved in 100 g of xylene adjusted at a temperature of 100°C, and then titrated with a 0.1 mol/L potassium hydroxide ethanol solution (trade name 0.1 mol/L Potassium Hydroxide Ethanolic Solution produced by Wako Pure Chemical Industries, Ltd.), using phenolphthalein as an indicator at the same temperature. The amount of potassium hydroxide required for titration was converted into milligrams to calculate the acid number (mgKOH/g).

### Measurement of Weight Average Molecular Weight (Mw)

The weight average molecular weight in the present invention is a value measured with an Alliance e2695 gel permeation chromatograph (referred to below as "GPC"; standard substance: polystyrene resin, mobile phase: tetrahydrofuran, column: Shodex KF-806 + KF-803, column temperature: 40°C, flow rate: 1.0 ml/min, detector: photodiode array detector (wavelength 254 nm = ultraviolet light)), produced by Nihon Waters K.K.

### Measurement of Melting Point

The melting point in the present invention is a value measured with a differential scanning calorimeter (referred to below as "DSC"; Q-2000 produced by TA Instruments Japan Inc.) from the top temperature of the melting peak when a sample was heated to 200°C at a rate of 10°C/min, cooled to -50°C at the same rate, and heated again at the same rate.

### Evaluation of Pot Life Properties

The pot life properties refer to the stability of a solution immediately after mixing modified polyolefins with a curing agent or after a certain time following mixing. Good pot life properties mean that the solution can be stored for a long period of time because of less increase in the viscosity of the solution. Poor pot life properties mean that the solution cannot be stored for a long period of time because the viscosity of the solution increases (the solution thickens) and, in severe cases, a gelation phenomenon occurs, making it difficult to apply the solution to a substrate.

The pot life properties of an adhesive composition were evaluated by measuring the viscosity of the solution at 25°C with a B-type viscometer after storing the solution at 25°C for 24 hours.

Tables 1 and 2 show the evaluation results.

### Evaluation criteria

A (extremely excellent in practical use): less than 300 mPa·s
B (particularly excellent in practical use): 300 mPa·s or more and less than 500 mPa·s
C (excellent in practical use): 500 mPa·s or more and less than 800 mPa·s
D (practicable): 800 mPa·s or more and less than 1000 mPa·s
E (impracticable): 1000 mPa·s or more or the viscosity could not be measured due to gelation

### Evaluation of Initial Adhesion

A laminate was cut into a size of 100 mm × 15 mm, and the adhesion was evaluated according to the T-peel test by using the following criteria.

The T-peel test was performed by measuring the peel strength at a tensile rate of 50 mm/min at 25°C in accordance with the test method of ASTM-D1876-61 by using a Tensilon RTM-100 produced by Orientec Corporation. The average of five test values was defined as the peel strength (N/cm) between a metal substrate and a polyolefin resin substrate.

The evaluation criteria were as follows.
A (extremely excellent in practical use): 8.0 N/cm or more
B (particularly excellent in practical use): 7.5 N/cm or more and less than 8.0 N/cm
C (excellent in practical use): 7.0 N/cm or more and less than 7.5 N/cm
D (practicable): 6.5 N/cm or more and less than 7.0 N/cm
E (impracticable): less than 6.5 N/cm

### Evaluation of Electrolyte Solution Resistance at 85°C

The electrolyte solution resistance was evaluated to investigate the usability as a packaging material for a lithium-ion battery. A laminate was cut into a size of 100 mm × 15 mm, and immersed in an electrolyte solution (solution obtained by adding 13 g of lithium hexafluorophosphate to 100 g of ethylene carbonate, diethyl carbonate, and dimethyl carbonate at a volume ratio of 1:1:1), at 85°C for 1 day. Thereafter, the laminate was removed, washed with ion-exchanged water, wiped off with a paper wipe, and sufficiently dried; and the electrolyte solution resistance was evaluated according to the T-peel test by using the following criteria.
A (extremely excellent in practical use): 8.0 N/cm or more
B (particularly excellent in practical use): 7.5 N/cm or more and less than 8.0 N/cm
C (excellent in practical use): 7.0 N/cm or more and less than 7.5 N/cm
D (practicable): 6.5 N/cm or more and less than 7.0 N/cm
E (impracticable): less than 6.5 N/cm

### Evaluation of Moldability

The moldability was evaluated according to the limit molding depth (deep drawability) of a produced laminate. The limit molding depth was measured in the following manner.

A laminate was cut into a size of 80 × 120 mm, and cold molding was performed. Specifically, cold molding was performed while changing the molding depth from 0.5 mm in increments of 0.5 mm under a pressing pressure of 0.4 MPa using a bulging machine (product number: TP-25C-X2) produced by Amada Co., Ltd., a mold (female mold) having an opening size of 55 mm × 35 mm, and a corresponding mold (male mold). 10 samples were used for each laminate. The deepest molding depth at which none of the 10 samples after cold-molding had creases, or pinholes or cracks in the aluminum foil, was defined as the limit molding depth of the samples. The moldability of a packaging material for batteries was evaluated from the limit molding depth using the following criteria. Tables 1 and 2 show the evaluation results.

### Evaluation Criteria

A (extremely excellent in practical use): limit molding depth of 6.0 mm or more
B (particularly excellent in practical use): limit molding depth of 4.0 mm or more and less than 6.0 mm
C (excellent in practical use): limit molding depth of 3.0 mm or more and less than 4.0 mm
D (practicable): limit molding depth of 2.0 mm or more and less than 3.0 mm
E (impracticable): limit molding depth of less than 2.0 mm

The heat resistance and the durability were evaluated according to the tensile elongation at break and the storage modulus.

### Measurement of Elongation at Break

The tensile elongation at break (Eb) at 25°C in the present invention was measured in accordance with the test method of JIS K7161 (2014). Specifically, the elongation (%) at break in tension at a rate of 50 mm/min at 25°C was measured using a Tensilon RTM-100 produced by Orientec Corporation.

The elongation at break at 85°C was a value measured at 85°C in the same manner. An obtained adhesive composition was applied to a Teflon (registered trademark) sheet with a 500-um applicator so that the film thickness of the adhesive layer after drying was 50 um. The coating surface was dried with a hot air dryer at 100°C for 1 minute. The adhesive layer was peeled off from the Teflon sheet to obtain a test piece with a film thickness of 50 um. The test piece was cut into a size of 50 mm × 15 mm. The same method as the T-peel test was carried out, and evaluation was performed according to the elongation at the time when the test piece became broken.
A (extremely excellent in practical use): 300% or more
B (particularly excellent in practical use): 250% or more and less than 300%
C (excellent in practical use): 220% or more and less than 250%
D (practicable): 2000 or more and less than 2200
E (impracticable): less than 2000

### Measurement of Storage Modulus

The storage modulus (E') in the present invention was measured in accordance with the test method of JIS K7244-4 (1999). Specifically, the storage modulus is a value measured using a DVA-200 dynamic viscoelastic analyzer produced by IT Keisoku Seigyo Co., Ltd., at a frequency of 10 Hz while increasing the temperature at a rate of 5°C/min from -50°C. The storage modulus was measured in an environment at 80°C and 110°C. The test piece used was prepared in the same manner as the test piece used in the measurement of elongation at break.
A (extremely excellent in practical use): 1.0 × 10⁶ Pa or more
B (particularly excellent in practical use): 1.0 × 10⁵ Pa or more and less than 1.0 × 10⁶Pa
C (excellent in practical use): 5.0 × 10⁴ Pa or more and less than 1.0 × 10⁵ Pa
D (practicable): 1.0 × 10⁴ Pa or more and less than 5.0 × 10⁴ Pa
E (impracticable): less than 1.0 × 10⁴ Pa

### Industrial Applicability

Since the adhesive composition according to the present invention comprises the modified polyolefins having different melting points, the thermoplastic resin, and the curing agent and exhibits remarkable followability to a substrate, the adhesive composition is excellent in processing properties, such as deep drawability. Moreover, the adhesive composition according to the present invention shows good adhesion to a polyolefin resin substrate and a metal substrate and chemical resistance, even under low-temperature bonding conditions, and has excellent heat resistance and durability after curing. Thus, a laminate of a polyolefin resin substrate and a metal substrate formed using the adhesive composition of the present invention can be used for a wide variety of fields such as not only exterior panels of household electrical appliances, furniture materials, and building interior components, but also packaging materials (pouches) for lithium-ion batteries used in computers, mobile phones, video cameras, etc.

## Claims

1. An adhesive composition comprising:
a modified polyolefin (A1);
a modified polyolefin (A2) containing propylene in an amount of 30 mol% or more and having a melting point higher than that of the modified polyolefin (A1); and
a thermoplastic resin (B),
wherein the molar ratio of propylene/1-butene in the modified polyolefin (A1) is 98 to 40/2 to 60, and the molar ratio of propylene/1-butene in the modified polyolefin (A2) is 99 to 55/1 to 45, **and wherein the thermoplastic resin (B) is a styrene-based elastomer or olefin-based elastomer.**

2. The adhesive composition according to claim 1,
wherein the difference between the melting point of the modified polyolefin (A1) and the melting point of the modified polyolefin (A2) is 3 to 55°C.

3. The adhesive composition according to **claim 1 or 2,**
wherein the modified polyolefin (A1) and the modified polyolefin (A2) each have an acid value of 2 to 50 mgKOH/g.

4. The adhesive composition according to any one of claims **1 to 3,** wherein the modified polyolefin (A1) and the modified polyolefin (A2) each have a melting point of 50 to 160°C.

5. The adhesive composition according to any one of claims **1 to 4,** wherein the thermoplastic resin (B) is an acid-modified thermoplastic resin.

6. The adhesive composition according to any one of claims **1 to 5,** wherein the thermoplastic resin (B) has an acid value of 2 to 50 mgKOH/g.

7. The adhesive composition according to any one of claims **1 to 6,** further comprising a curing agent (C).

8. The adhesive composition according to claim **7,** wherein the curing agent (C) is an epoxy curing agent or an isocyanate curing agent.

9. The adhesive composition according to any one of claims 1 to **8,** wherein the mass ratio of the thermoplastic resin (B) is 5 to 30 parts by mass, based on 100 parts by mass of the total amount of the modified polyolefin (A1) and the modified polyolefin (A2).

10. **A use of the** adhesive composition ac ording to any one of claims
**1 to 9 for** bonding a polyolefin resin substrate and a metal substrate.

11. A laminate comprising a polyolefin resin substrate and a metal substrate bonded with the adhesive composition according to any one of claims 1 to **10.**

12. A packaging material for a lithium-ion battery, comprising the laminate according to claim **11** as a constituent member.

## Patentansprüche

1. Eine Klebstoffzusammensetzung, umfassend:
ein modifiziertes Polyolefin (A1);
ein modifiziertes Polyolefin (A2), das Propylen in einer Menge von 30 Mol-% oder mehr enthält und einen Schmelzpunkt aufweist, der höher ist als der des modifizierten Polyolefins (A1); und
ein thermoplastisches Harz (B),
wobei das Molverhältnis von Propylen/1-Buten in dem modifizierten Polyolefin (A1) 98 bis 40/2 bis 60 beträgt und das Molverhältnis von Propylen/1-Buten in dem modifizierten Polyolefin (A2) 99 bis 55/1 bis 45 beträgt und wobei das thermoplastische Harz (B) ein Elastomer auf Styrolbasis oder ein Elastomer auf Olefinbasis ist.

2. Die Klebstoffzusammensetzung nach Anspruch 1, wobei die Differenz zwischen dem Schmelzpunkt des modifizierten Polyolefins (A1) und dem Schmelzpunkt des modifizierten Polyolefins (A2) 3 bis 55°C beträgt.

3. Die Klebstoffzusammensetzung nach Anspruch 1 oder 2, wobei das modifizierte Polyolefin (A1) und das modifizierte Polyolefin (A2) jeweils eine Säurezahl von 2 bis 50 mgKOH/g aufweisen.

4. Die Klebstoffzusammensetzung nach einem der Ansprüche 1 bis 3, wobei das modifizierte Polyolefin (A1) und das modifizierte Polyolefin (A2) jeweils einen Schmelzpunkt von 50 bis 160°C aufweisen.

5. Die Klebstoffzusammensetzung nach einem der Ansprüche 1 bis 4, wobei das thermoplastische Harz (B) ein säuremodifiziertes thermoplastisches Harz ist.

6. Die Klebstoffzusammensetzung nach einem der Ansprüche 1 bis 5, wobei das thermoplastische Harz (B) eine Säurezahl von 2 bis 50 mgKOH/g aufweist.

7. Die Klebstoffzusammensetzung nach einem der Ansprüche 1 bis 6, weiter umfassend ein Härtungsmittel (C).

8. Die Klebstoffzusammensetzung nach Anspruch 7, wobei das Härtungsmittel (C) ein Epoxidhärtungsmittel oder ein Isocyanathärtungsmittel ist.

9. Die Klebstoffzusammensetzung nach einem der Ansprüche 1 bis 8, wobei das Massenverhältnis des thermoplastischen Harzes (B) 5 bis 30 Massenteile, bezogen auf 100 Massenteile der Gesamtmenge des modifizierten Polyolefins (A1) und des modifizierten Polyolefins (A2), beträgt.

10. Eine Verwendung der Klebstoffzusammensetzung nach einem der Ansprüche 1 bis 9 zum Verkleben eines Polyolefinharzsubstrats und eines Metallsubstrats.

11. Ein Laminat, umfassend ein Polyolefinharzsubstrat und ein Metallsubstrat, die mit der Klebstoffzusammensetzung nach einem der Ansprüche 1 bis 10 verklebt sind.

12. Ein Verpackungsmaterial für eine Lithium-Ionen-Batterie, welches das Laminat nach Anspruch 11 als einen Bestandteil umfasst.

## Revendications

1. Composition d'adhésif comprenant :
une polyoléfine modifiée (A1) ;
une polyoléfine modifiée (A2) contenant du propylène en une quantité de 30 % en moles ou plus et ayant un point de fusion supérieur à celui de la polyoléfine modifiée (A1) ; et
une résine thermoplastique (B),
dans laquelle le rapport molaire propylène/1-butène dans la polyoléfine modifiée (A1) est de 98 à 40/2 à 60, et le rapport molaire propylène/1-butène dans la polyoléfine modifiée (A2) est de 99 à 55/1 à 45, et dans laquelle la résine thermoplastique (B) est un élastomère à base de styrène ou un élastomère à base d'oléfine.

2. Composition d'adhésif selon la revendication 1, dans laquelle la différence entre le point de fusion de la polyoléfine modifiée (A1) et le point de fusion de la polyoléfine modifiée (A2) est de 3 à 55°C.

3. Composition d'adhésif selon la revendication 1 ou 2, dans laquelle la polyoléfine modifiée (A1) et la polyoléfine modifiée (A2) ont chacune un indice d'acide de 2 à 50 mg KOH/g.

4. Composition d'adhésif selon l'une quelconque des revendications 1 à 3, dans laquelle la polyoléfine modifiée (A1) et la polyoléfine modifiée (A2) ont chacune un point de fusion de 50 à 160°C.

5. Composition d'adhésif selon l'une quelconque des revendications 1 à 4, dans laquelle la résine thermoplastique (B) est une résine thermoplastique modifiée par un acide.

6. Composition d'adhésif selon l'une quelconque des revendications 1 à 5, dans laquelle la résine thermoplastique (B) a un indice d'acide de 2 à 50 mg KOH/g.

7. Composition d'adhésif selon l'une quelconque des revendications 1 à 6, comprenant en outre un agent durcisseur (C).

8. Composition d'adhésif selon la revendication 7, dans laquelle l'agent durcisseur (C) est un agent durcisseur époxy ou un agent durcisseur isocyanate.

9. Composition d'adhésif selon l'une quelconque des revendications 1 à 8, dans laquelle la proportion en masse de la résine thermoplastique (B) est de 5 à 30 parties en masse pour 100 parties en masse de la quantité totale de la polyoléfine modifiée (A1) et de la polyoléfine modifiée (A2).

10. Utilisation de la composition d'adhésif selon l'une quelconque des revendications 1 à 9 pour coller un substrat en résine de polyoléfine et un substrat métallique.

11. Stratifié comprenant un substrat en résine de polyoléfine et un substrat métallique collés avec la composition d'adhésif selon l'une quelconque des revendications 1 à 10.

12. Matériau de conditionnement pour une batterie au lithium-ion, comprenant le stratifié selon la revendication 11 en tant qu'élément constitutif.
